# EUROPEAN PATENT SPECIFICATION

(11) **EP 1 938 077 B1**
(45) Date of publication and mention of the grant of the patent: **28.07.2010**
(21) Application number: 06780435.1
(22) Date of filing: 27.08.2006
(51) Int. Cl.: G01N 1/22

(54) **METHOD AND APPARATUS FOR DETECTING TRACE AMOUNTS OF SUBSTANCES**
VERFAHREN UND VORRICHTUNG ZUM NACHWEIS VON SPUREN AN SUBSTANZEN
PROCEDE ET DISPOSITIF PERMETTANT DE DETECTER DES QUANTITES TRACES DE SUBSTANCES

(30) Priority: 06.09.2005 IL 17070105
(43) Date of publication of application: 02.07.2008
(73) Proprietor: S.T.I. Security Technology Integration Ltd., 60990 Shefayim (IL)
(72) Inventor: OVADIA, Yuval, 30065 Kibbutz Yagur (IL); BIRAN, Yaniv, 55226 Kiryat-Ono (IL)
(74) Representative: Harrison Goddard Foote
(86) International application number: PCT/IL2006/000989
(87) International publication number: WO 2007/029233

(56) References cited:
- EP-A2- 0 369 661
- EP-A2- 0 955 536
- WO-A-00/16064
- WO-A-98/57140
- US-A- 5 915 268
- US-A1- 2003 041 573
- US-A1- 2005 181 520

## Description

### FIELD AND BACKGROUND OF THE INVENTION

The present invention relates to a method and apparatus for detecting trace amounts of substances. The invention is particularly useful for detecting concealed explosive substances or drug substances and is therefore described below with respect to such applications.

It is generally well recognized that there is a critical need for detecting concealed explosives and/or drugs in a manner which imposes a minimum intrusion or interference in routine practices for accommodating the movement of persons, luggage, and other objects. Many methods and systems have been proposed in the patent literature for accomplishing this purpose, as described for example in US patents 4,819,477; 4,221,964; 5,104,513; 5,818,047; 5,942,699; 6,073,499; 6,074,608; and 6,794,645. Some of the disclosed methods are based on a sniffer technique wherein a flow of air is applied to the examined object in order to dislodge substances carried by the object, and then analyzing the collected air for the presence of the target substance, e.g. an explosive substance, a drug, or the like. Nevertheless, none of the known methods involving a sniffer technique has yet found widespread use, generally because of inadequate sensitivity, and therefore the examining techniques currently in use continue to be those based on a high degree of intrusion or interference with the movement of persons, luggage or other objects.

WO 00/16064 discloses a hand-held pulsed air sampler that can eject a pulse of heated air to a surface so as to dislodge particles from the surface, and can collect the air for sampling.

US 2003/041573 discloses a cubicle for screening persons, the cubicle having means for supplying heated air to dislodge particles and means for collecting the air for sampling.

US 2005/181520 discloses a chamber for detecting contaminants, in which air is blown onto a sample and subsequently collected for analysis.

### OBJECTS AND BRIEF SUMMARY OF THE PRESENT INVENTION

An object of the present invention is to provide a method and apparatus for detecting trace amounts of substances in a manner which is capable of a high degree of sensitivity and which can be implemented with a minimum intrusion or interference in the movement of persons, luggage, and the like. Another object of the present invention is to provide such a method and apparatus which is particularly useful for detecting concealed explosives and/or drugs.

According to one aspect of the present invention there is provided a method of examining objects for detecting trace amounts of a target substance carried by the object, comprising: applying to the object a flow of air which has been pre-heated, to dislodge substances carried by the object; collecting the heated air after it has been applied to the object; and analyzing said collected heated air for the presence of said target substance, **characterized in that** an ambient temperature is determined, and in that said air is pre-heated to a temperature at least ten degrees above the ambient temperature to a temperature within the range of 20-42 degrees Celsius, and in that a marker substance is introduced into the heated air before it is applied to the object, and the collected heated air is analyzed also for the presence of said marker substance.

It will be seen that the above aspect of the method differs from conventional "sniffing" techniques, in that the air applied to the object in order to dislodge substances carried by the object is pre-heated before being applied to the object, e.g. a person, a piece of luggage, a container, or the like. The air is pre-heated at least ten degrees Centigrade above ambient, but within the range of 20 - 42 degrees Centigrade. It has been found that when the air is so pre-heated before being applied to the object, the sensitivity of the "sniffing" technique is significantly increased. Also, a marker substance is introduced into the air before applied to the object, and the collected heated air is analyzed also for the presence of the marker substance.

The method of examining objects may be carried out within an examination station for detecting trace amounts of a target substance carried by the object, the method comprising: applying air both vertically and horizontally within the examination station to dislodge from the object substances carried by the object; collecting the air after applied to the object; and analyzing the collected air for the presence of the target substance.

According to further features in one described preferred embodiment, the examination station is of cylindrical configuration, and the heated air is applied both vertically through the examination station and horizontally within the examination station. It has been found that providing this feature also significantly increases the sensitivity of the method.

According to a further aspect of the present invention, there is provided apparatus for examining objects for detecting trace amounts of a target substance carried by the object, comprising:
a source of pressurized air for applying a flow of air to the object in order to dislodge substances therefrom;
a heater for heating the air before it is applied to the object;
a collector for collecting the air after it has been applied to the object; and
an analyzer for analyzing the collected air for the presence of said target substance;
**characterized in that** the heater is configured to heat the air to a temperature of at least ten degrees Celsius above an ambient temperature but within the range of 20-42 degrees Celsius, and in that said apparatus further comprises an injector for introducing a marker substance into the heated air before it is applied to the object; and in that said analyzer analyzes said collected air also for the presence of said marker substance.

The apparatus may comprise: an examination station sized and dimensioned for receiving the objects to be examined, a first group of nozzles for applying a flow of air vertically through the examination station in order to dislodge substances from the object; a second group of nozzles for applying a flow of air horizontally through the examination station in order to dislodge substances from the object; a collector for collecting the air after applied to the object; and an analyzer for analyzing the collected air for the presence of said target substance.

As will be described more particularly below, the foregoing features increase the sensitivity of the "sniffer" technique for detecting trace amounts of controlled substances with a minimum of intrusion or interference, such as to enable this technique to be effectively used for detecting concealed explosives and/or drugs. It will also be appreciated, however, that the invention could also be used in other methods and apparatus for detecting trace amounts of other substances, such as in analyzing the perspiration of a person for detecting various possible diseases, and in analyzing food products for food monitoring and control.

Further features and advantages of the invention will be apparent from the description below.

### BRIEF DESCRIPTION OF THE DRAWINGS

The invention is herein described, by way of example only, with reference to the accompanying drawings, wherein:
Fig. 1 is a block diagram broadly illustrating one feature of the present invention;
Figs. 2a-2d illustrate one form of apparatus constructed in accordance with the present invention particularly for examining persons in order to detect trace amounts of a target substance, such as a concealed explosive or drug, and the various air-flow arrangements that may be provided in such an apparatus;
Fig. 3 illustrates a luggage inspection apparatus constructed in accordance with the present invention;
Figs. 4a and 4b illustrate one form of manually transportable apparatus constructed in accordance with present invention;
Fig. 5 illustrates one form of apparatus constructed in accordance with the present invention carried by a wheeled cart to facilitate transporting it from one location to another;
Fig. 6 illustrates another apparatus constructed in accordance with the present invention particularly for examining large shipment containers in order to detect trace amounts of a targetted substance;
Fig. 7 illustrates another form of apparatus constructed in accordance with the present invention for examining containers for trace amounts of targeted substances;
Fig. 8 illustrates another form of apparatus constructed in accordance with the present invention and including a wireless transmitter for transmitting to a remote location the results of the examination; and
Fig. 9 illustrates an apparatus similar to that of Fig. 7, but modified to include an injector for introducing a marker substance into the air before applied to the object.

It is to be understood that the foregoing drawings, and the description below, are provided primarily for purposes of facilitating understanding the conceptual aspects of the invention and possible embodiments thereof, including what is presently considered to be a preferred embodiment. In the interest of clarity and brevity, no attempt is made to provide more details than necessary to enable one skilled in the art, using routine skill and design, to understand and practice the described invention. It is to be further understood that the embodiments described are for purposes of example only, and that the invention is capable of being embodied in other forms and applications than described herein.

### DESCRIPTION OF PREFERRED EMBODIMENTS

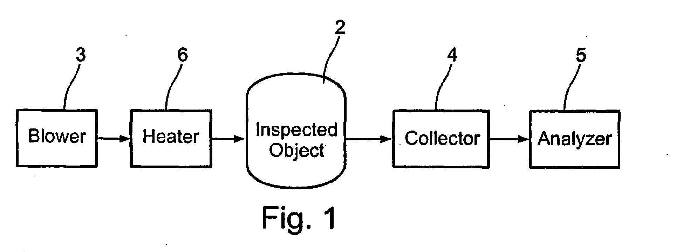

Reference is first made to the block diagram of Fig. 1 diagrammatically illustrating one form of apparatus constructed in accordance with the present invention. Thus, as shown in Fig. 1, the apparatus includes an examination station 2 for receiving the object to be examined, e.g. a person or a piece of luggage, in order to detect trace amounts of a target substance, such as a concealed explosive, drug, or the like. The illustrated apparatus further includes a blower 3 for applying to the object within examination station a flow of air in order to dislodge substance carried by the object; a collector 4 for collecting the air after applied to the object within examination station 2; and an analyzer 5 for analyzing the collected air for the presence of the target substance.

As further shown in Fig. 1, the illustrated apparatus further includes a pre-heater 6 between the blower 3 and the examination station 2 receiving the examined object. Pre-heater 6 pre-heats the air from blower 3 before it is applied to the object within examination station 2. It has been found that pre-heating the air before it is applied to the object more effectively dislodges substances carried by the object for collection within the collector 4 and for analysis within analyzer 5.

Preferably, the pre-heating is at least ten degrees Centigrade above ambient temperature, but within the range of 20-42 degrees Centigrade. Following is a table setting forth preferred air temperature after pre-heating for various ambient temperatures:

| AMBIENT TEMPERATURE | AIR TEMPERATURE AFTER PRE-HEATING |
|---|---|
| 5° C | 20° C |
| 10° C | 20° C |
| 15° C | 25° C |
| 20° C | 30° C |
| 25° C | 35° C |
| 30° C | 40° C |
| 35° C | 42° C |

It has been found that when the air from blower 3 is pre-heated as set forth above, according to the prevailing ambient temperature, the so pre-heated air more effectively dislodges trace substances carried by the person, or other object, thereby substantially increasing the sensitivity of the analysis in analyzer 5 of the air collected in the collector 4.

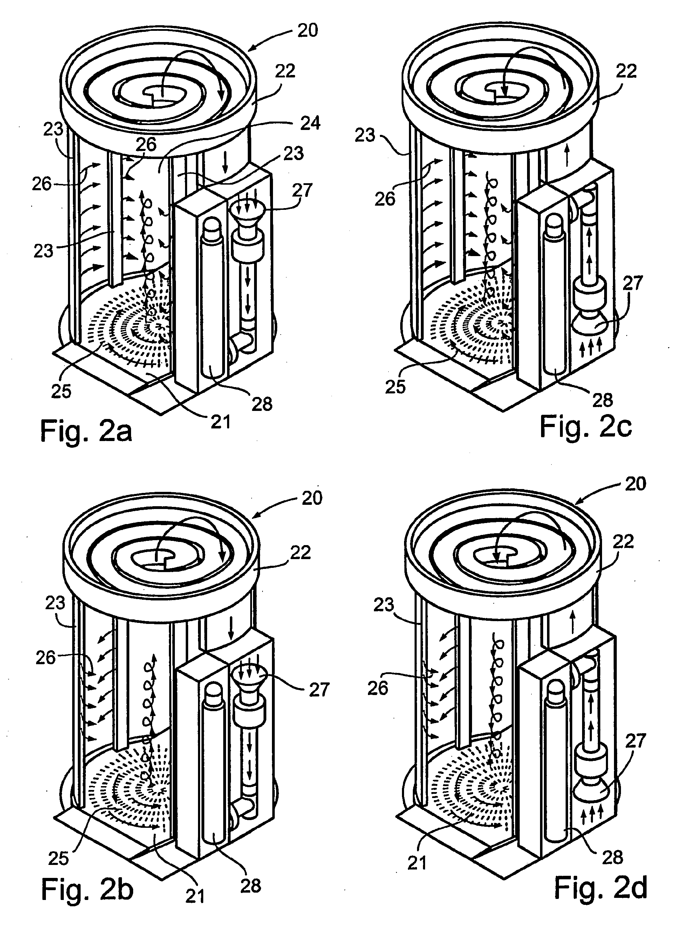

Figs. 2a-2d illustrate one form of examination station, corresponding to examination station 2 in Fig. 1, for examining a person in order to detect trace amounts of a target substance carried by the person. Figs. 2a-2d also illustrate various types of airflow arrangements that may be provided for applying the pre-heated air to the person within the examination station 2.

With reference to Fig. 2a, it will be seen that the examination station, therein generally designated 20, is of generally cylindrical configuration, being dimensioned and configured for receiving a person to be examined. It includes a base 21 for receiving the person in a standing position, a top cover 22 overlying the person, and a cylindrical array of uprights 23, with the spaces 24 between the uprights preferably not covered. If desired, however, the spaces 24 between the cylindrical array of uprights 23 could be covered by a transparent or translucent plastic housing so as not to produce a confined feeling in the person being examined.

The base 21 includes a group of first air nozzles 25, arranged in a plurality of concentric circles, for producing a plurality of air streams directed vertically from the base 21 to the top cover 22. The vertically-extending uprights 23 include a second group of air nozzles 26 for producing another plurality air streams directed horizontally circumferentially of the examination station. As a result, the person within the examination station 20 is subjected to two groups of air streams: a first group of vertically-flowing air streams coaxial around the vertical axis of the examination station from the first group of air nozzels 25 in the base 21; and a second group of circumferentially-flowing horizontal air streams vertically spaced about the vertical axis of the examination station.

The above describes streams of heated air produced by the two groups of nozzles 25, 26 within examination station 20 are effective to dislodge any particles or other substances carried by the object and to entrain such particles or substances within the air flowing to the top cover 22 of examination station 20. The heated air, including the dislodged particles or other substances, is conducted to a collector 27, and is fed therefrom to the analyzer 28, where the collected air is analyzed for the particular target substance, e.g. a concealed explosive, drug, or the like. Analyzer 28 may be of any known type, according to the particular target substance to be detected. Many such analyzers are known as described for example in the above-cited patents, the contents of which are incorporated herein by reference. One preferred example is the chromatograph flash mass spectrometer identified as the Hapsite Smart Chemical Identification System supplied by Inficon Corporation of Syracuse, New York, USA.

As seen in Fig. 2a, the horizontally-directed streams of heated air produced by nozzles 26 flow clockwise within examination station 20. Such a flow direction is preferable when the apparatus is used in the southern hemisphere. Fig. 2b illustrates the arrangement wherein the horizontally flowing heated air is in the opposite direction i.e. counter clockwise, which is preferable when the apparatus is used in the northern hemisphere.

In both Figs. 2a and 2b, the vertically-flowing streams of heated air flow in the upward direction, i.e., from the base 21 towards the upward cover 22. Figs. 2c and 2d illustrate variations in Figs. 2a and 2b, respectively, wherein the vertically-flowing streams are in the opposite direction i.e. from the top cover 22 towards the base 21. In all cases the heated air, after applied to the person within the examination station 20, is collected by collector 27 and analyzed in analyzer 28 as described above.

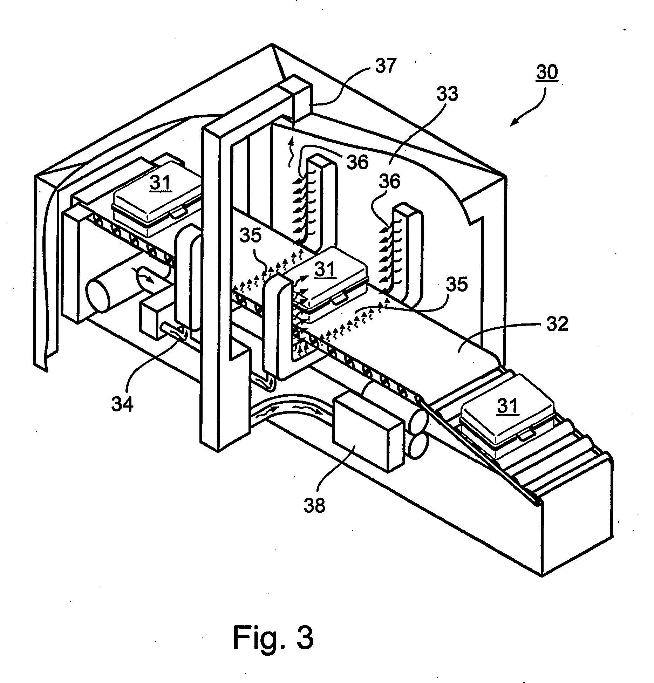

Fig. 3 illustrates the invention embodied in another form of apparatus, generally designated 30, for inspecting luggage 31 fed by a feeding belt 32 through an examination station 33. In this case, the air, pre-heated as described above, is supplied via ducts 34 to a plurality of vertically-oriented air nozzles 35 and a plurality of horizontally-oriented air nozzles 36 within the examination station 33 of the conveyor belt 32, in order to apply heated air to the luggage 31 passing through the examination station 33 and thereby to dislodge substances carried by the luggage. The dislodged substances are collected by a collector 37 and conveyed to an analyzer 38, where the air is analyzed in order to detect the presence of a target substance therein.

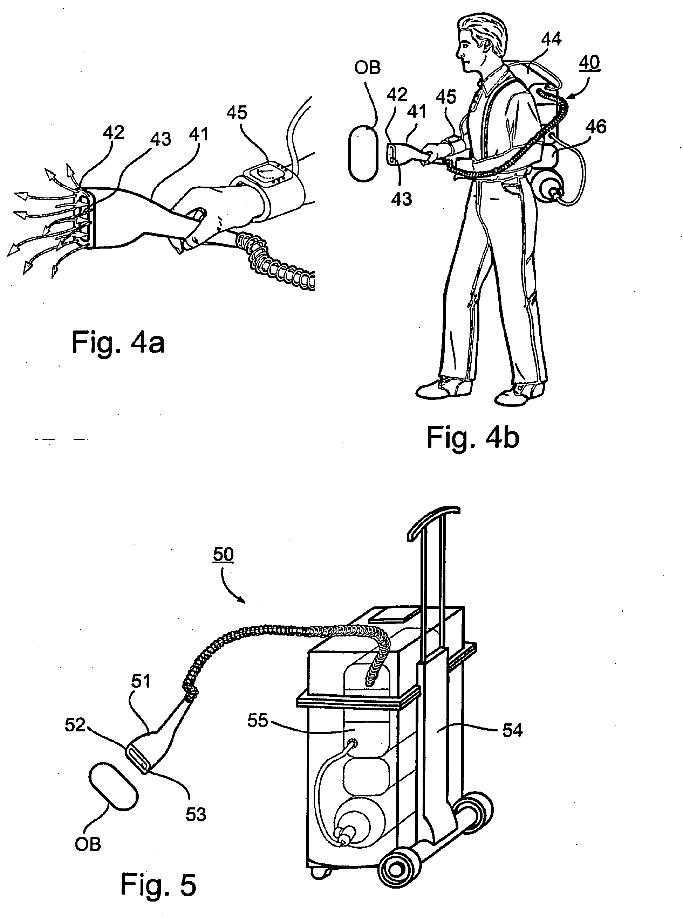

Figs. 4a and 4b illustrate the invention implemented in apparatus, generally designated 40, included in a backpack for carrying by an individual, and a manually-manipulatable probe 41 for applying the pre-heated air to the person or other object being examined for trace amounts of a target substance. In this case, the air, after being pre-heated by a heater 46 within the backpack 40, is applied via outlet 42 of probe 41, to the object OB being examined, and the heated air, after being so applied, is collected by inlet 43 of the probe and fed to an analyzer 44, also carried by the backpack 40, for the presence of a target substance dislodged from the object by the heated air. The results of the analysis may be fed to a display unit 45 strapped on the wrist of the person carrying the backpack and manipulating the probe 41.

As shown particularly in Fig. 4a, the outlet 42 in the probe for the pre-heated air applied to the object being examined, and the inlet 43 in the probe for collecting the heated air after being applied to the object, are located coaxially with respect to each other, the outlet 42 being located outwardly of and enclosing the inlet 43. It will be appreciated, however, that other suitable arrangement for applying the heated air and collecting it could be provided within the probe 41.

Fig. 5 illustrates apparatus, generally designated 50, constructed in accordance with the present invention implemented in a wheeled cart 54 for easy transportation to any desired inspection site. Apparatus 50 illustrated in Fig. 5 also includes a manually manipulatable probe 51, including an outlet 52 for applying pre-heated to the object OB being examined in order to dislodge particles or other substances carried thereby, and an inlet 53 for collecting the air together with the particles or other substances entrained therein. Probe 51 in Fig. 5 may be of the same construction as probe 41 in Fig. 4a.

It will be appreciated that the portion of apparatus 50 carried by the wheeled cart 54 includes the blower for producing the airflow through outlet 52 of probe 51, the pre-heater for heating the air before discharged through outlet 52, and an analyzer 55 for analyzing the collected air for the presence of the target substances.

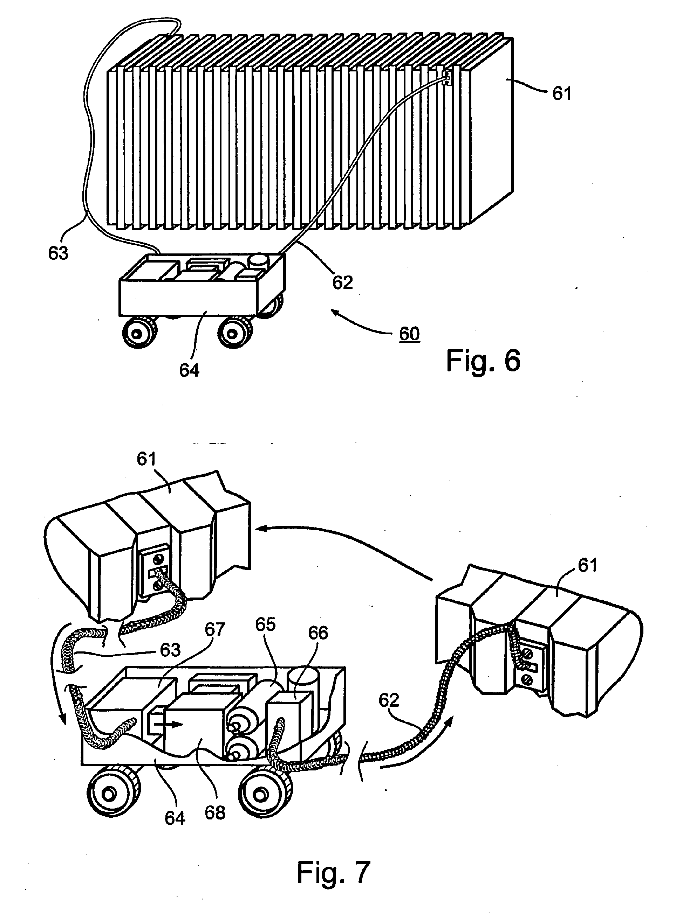

Fig. 6 illustrates the apparatus, therein generally designated 60, also carried by a wheeled cart. In this case, however, the apparatus is used for inspecting a shipping container 61, by applying the pre-heated air via a duct 62 into one end of the container in order to dislodge particles from the goods therein. The pre-heated air, after being applied to the interior of container 61, is collected and outletted via an outlet duct 63 and fed to an analyzer carried by the cart 64 of apparatus 60. It will be appreciated that the illustrated cart includes, not only the analyzer corresponding to analyzer 5 in Fig. 1, but also the blower and pre-heater, corresponding to blower 3 and pre-heater 6 in Fig. 1.

Fig. 7 diagrammatically illustrates more particularly the various components of the cart 60 illustrated in Fig. 6. Thus, as shown Fig. 7, cart 64 includes a blower 65 for producing the flow of air applied to one end of container 61 via a duct 62, and a pre-heater 66 for pre-heating the air before being applied via duct 62 to container 61. Cart 60 further includes a pump 67 for drawing out the air from container 61, together with any dislodged particles or substances entrained within the air, and for feeding such air to an analyzer 68 for analysis of the presence of the target substance.

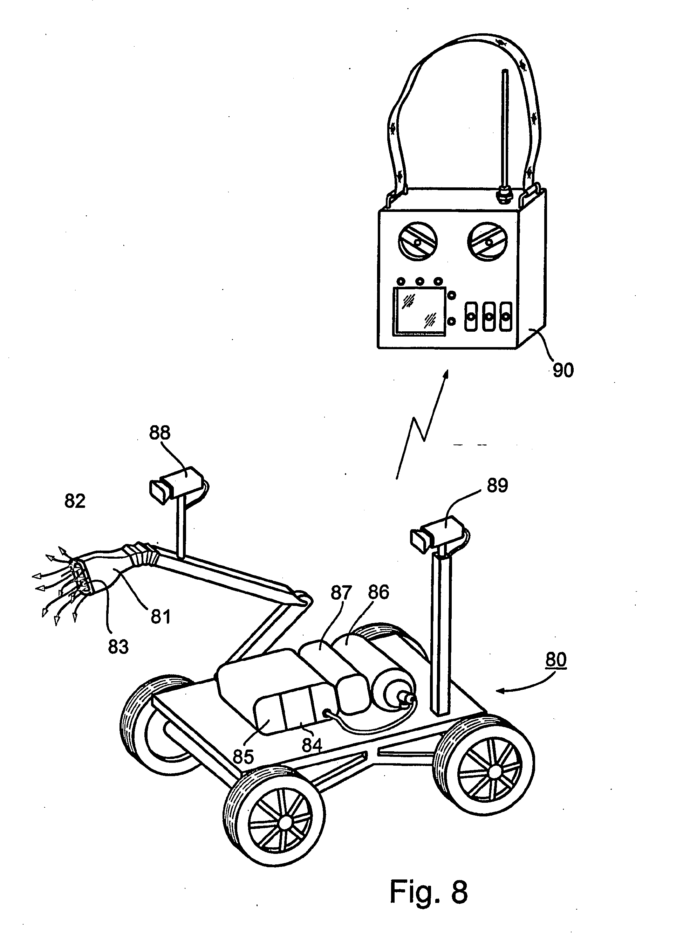

Fig. 8 illustrates the apparatus constructed in accordance with the invention carried by an automotive vehicle 80 to facilitate transporting the apparatus to any desired inspection location. The apparatus illustrated in Fig. 8 also includes a probe 81, which may be of similar construction as probe 41 in Fig. 4a and probe 51 in Fig. 5, to include an outlet 82 for discharging pre-heated air to the object being examined, and an inlet 83 for collecting the air after so applied to the object. Vehicle 80 carries the blower 84 for producing the flow of air via probe 82, and the pre-heater 85 for pre-heating the air as described above. Vehicle 80 further includes a suction pump 86 for drawing the air via inlet 83 and the analyzer 87 which analyzes the collected air for the presence of the target substance.

The apparatus illustrated in Fig. 8 further includes local display unit 88 which displays the results of the analysis analyzer 87, and a wireless transmitter 89 which transmits the results of the analysis to a remotely-located receiver 90 to permit monitoring the results of the examination process at a remote location.

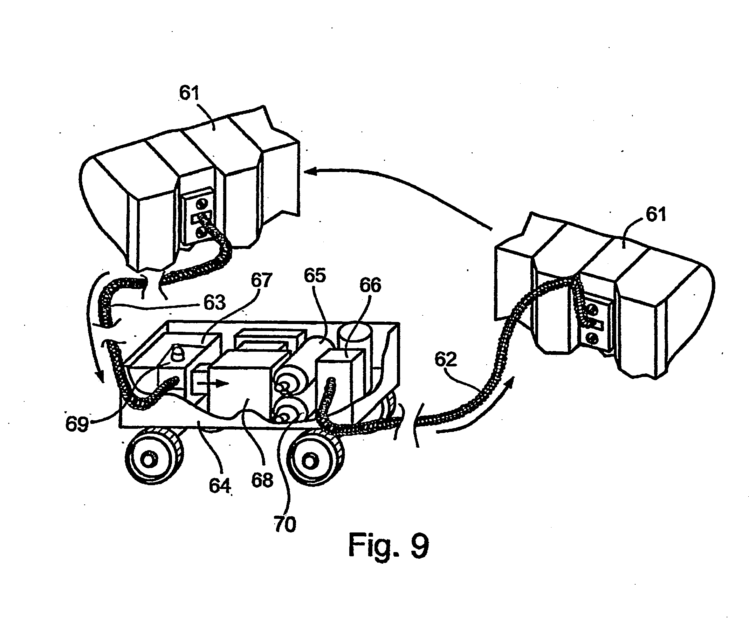

Fig. 9 illustrates an apparatus basically the same as that of Fig. 7, except modified to include an injector 70 for introducing a marker substance into the air before applied to the container. Such a marker substance may be an inert gas, or other substance, such as nitrogen, xenon, etc., or an active substance, such as Freon, which is sensible by analyzer 69. The introduction of such a marker substance into the heated air before applied to the container, and its detection in the air collected from the container, better assures that the gas collected and analyzed is the gas originally introduced. Analyzer 68 does not detect the gas introduced by injector 70, and the injection of the marker substance does not interfere with the analyzer 68 process described hereinabove.

While the invention has been described with respect to several preferred embodiments, it will be appreciated that these are set forth merely for purposes of example, and that many other variations, modifications and applications of the invention may be made.

## Claims

1. A method of examining objects (31) for detecting trace amounts of a target substance carried by the object (31), comprising: applying to the object (31) a flow of air which has been pre-heated, to dislodge substances carried by the object (31); collecting the heated air after it has been applied to the object (31); and analyzing said collected heated air for the presence of said target substance, **characterized in that** an ambient temperature is determined, and **in that** said air is pre-heated to a temperature at least ten degrees above the ambient temperature to a temperature within the range of 20-42 degrees Celsius, and **in that** a marker substance is introduced into the heated air before it is applied to the object (31), and the collected heated air is analyzed also for the presence of said marker substance.

2. The method according to claim 1, wherein said object (31) is located within an examination station (2, 20, 30), and said heated air is applied both vertically and horizontally within said examination station (2, 20, 30).

3. The method according to claim 2, wherein said examination station (2, 20) is of a cylindrical configuration, and said heated air applied horizontally within said examination station (2, 20).

4. The method according to claim 2 or 3, wherein said heated air applied vertically is applied at the lower end of the examination station (2, 20, 30) and is collected at the upper end of the examination station (2, 20, 30).

5. The method according to claim 2 or 3, wherein said heated air applied vertically is applied at the upper end of the examination station (2, 20, 30) and is collected at the lower end of the examination station (2, 20, 30).

6. The method according to any preceding claim, wherein the object (31) is a person or a piece of luggage.

7. Apparatus (20, 30) for examining objects (31) for detecting trace amounts of a target substance carried by the object (31), comprising:
a source of pressurized air (3) for applying a flow of air to the object (31) in order to dislodge substances therefrom;
a heater (6) for heating the air before it is applied to the object (31);
a collector (4, 27, 37) for collecting the air after it has been applied to the object (31); and
an analyzer (5, 28, 38) for analyzing the collected air for the presence of said target substance;
**characterized in that** the heater (6) is configured to heat the air to a temperature of at least ten degrees Celsius above an ambient temperature but within the range of 20-42 degrees Celsius, and **in that** said apparatus (20, 30) further comprises an injector (70) for introducing a marker substance into the heated air before it is applied to the object (31); and **in that** said analyzer (5) analyzes said collected air also for the presence of said marker substance.

8. The apparatus (20, 30) according to claim 7, wherein said apparatus (20, 30) further comprises an examination station (2) for receiving the objects (31) to be examined; a first group of air nozzles (25, 35) located for applying said air vertically through the examination station (2); and a second group of air nozzles (26, 36) located for applying said air horizontally within the examination station (2).

9. The apparatus (20) according to claim 8, wherein said examination station (2) is of a cylindrical configuration, and said second group of nozzles (26) are orientated to apply said heated air circumferentially within the examination station (2).

10. The apparatus (20, 30) according to claim 8 or 9, wherein said first group of air nozzles (25, 35) are located to apply the heated air into the lower end of the examination station (2), and said collector (4, 27, 37) is located to collect the air from the upper end of the examination station (2).

11. The apparatus (20) according to claim 9, wherein said first group of air nozzles (25) are located to apply the heated air into the upper end of the examination station (2), and said collector (27) is located to collect the air from the lower end of the examination station (2).

## Patentansprüche

1. Verfahren zur Untersuchung von Objekten (31) zum Aufspüren von Spuren einer von dem Objekt (31) mitgeführten Zielsubstanz, das Folgendes aufweist: Aufbringen eines Luftstroms, der vorgewärmt worden ist, auf das Objekt (31), um vom Objekt (31) mitgeführte Substanzen zu entfernen; Sammeln der erwärmten Luft, nachdem sie auf das Objekt (31) aufgebracht worden ist; und Analysieren der gesammelten erwärmten Luft auf das Vorhandensein der Zielsubstanz, **dadurch gekennzeichnet, dass** eine Umgebungstemperatur bestimmt wird, und dass die Luft auf eine Temperatur von mindestens zehn Grad über der Umgebungstemperatur auf eine Temperatur im Bereich von 20-42 Grad Celsius vorgewärmt wird, und dass eine Markersubstanz in die erwärmte Luft eingeleitet wird, bevor sie auf das Objekt (31) aufgebracht wird, und dass die erwärmte Luft auch auf das Vorhandensein der Markersubstanz analysiert wird.

2. Verfahren nach Anspruch 1, bei dem das Objekt (31) innerhalb einer Untersuchungsstation (2, 20, 30) angeordnet ist und die erwärmte Luft sowohl vertikal als auch horizontal innerhalb der Untersuchungsstation (2, 20, 30) aufgebracht wird.

3. Verfahren nach Anspruch 2, bei dem die Untersuchungsstation (2, 20) eine zylindrische Gestaltung aufweist und die erwärmte Luft innerhalb der Untersuchungsstation horizontal aufgebracht wird.

4. Verfahren nach Anspruch 2 oder 3, bei dem die vertikal aufgebrachte, erwärmte Luft beim unteren Ende der Untersuchungsstation (2, 20, 30) aufgebracht wird und beim oberen Ende der Untersuchungsstation (2, 20, 30) gesammelt wird.

5. Verfahren nach Anspruch 2 oder 3, bei dem die vertikal aufgebrachte, erwärmte Luft beim oberen Ende der Untersuchungsstation (2, 20, 30) aufgebracht wird und beim unteren Ende der Untersuchungsstation (2, 20, 30) gesammelt wird.

6. Verfahren nach jedem beliebigen der vorhergehenden Ansprüche, bei dem das Objekt (31) eine Person oder ein Gepäckstück ist.

7. Vorrichtung (20, 30) zur Untersuchung von Objekten (31) zum Aufspüren von Spuren einer von dem Objekt (31) mitgeführten Zielsubstanz, die Folgendes aufweist:
eine Luftdruckquelle (3) zum Aufbringen eines Luftstroms auf das Objekt (31), um Substanzen davon zu entfernen;
einen Heizer (6) zum Erwärmen der Luft, bevor sie auf das Objekt (31) aufgebracht wird;
einen Kollektor (4, 27, 37) zum Sammeln der Luft, nachdem sie auf das Objekt (31) aufgebracht worden ist; und
einen Analysierer (5, 28, 38) zum Analysieren der gesammelten Luft auf das Vorhandensein der Zielsubstanz;
**dadurch gekennzeichnet, dass** der Heizer (6) dazu ausgebildet ist, die Luft auf eine Temperatur von mindestens 10 Grad Celsius über einer Umgebungstemperatur, aber innerhalb des Bereichs von 20-42 Grad Celsius, zu erwärmen, und dass die Vorrichtung (20, 30) ferner einen Injektor (70) zum Einleiten einer Markersubstanz in die erwärmte Luft, bevor sie auf das Objekt (31) aufgebracht wird, aufweist; und dass die Analyseeinheit (5) die gesammelte Luft auch auf das Vorhandensein der Markersubstanz analysiert.

8. Vorrichtung (20, 30) nach Anspruch 7, ferner aufweisend eine Untersuchungsstation (2) zur Aufnahme der zu untersuchenden Objekte (31); eine erste Gruppe von Luftdüsen (25, 35), die angeordnet ist, um die Luft vertikal durch die Untersuchungsstation (2) aufzubringen; und eine zweite Gruppe von Luftdüsen (26, 36), die angeordnet ist, um die Luft horizontal innerhalb der Untersuchungsstation (2) aufzubringen.

9. Vorrichtung (20) nach Anspruch 8, bei der die Untersuchungsstation (2) eine zylindrische Gestaltung aufweist, und bei der die zweite Gruppe von Düsen (26) ausgerichtet ist, um die erwärmte Luft umfangsseitig innerhalb der Untersuchungsstation (2) aufzubringen.

10. Vorrichtung (20, 30) nach Anspruch 8 oder 9, bei der die erste Gruppe von Luftdüsen (25, 35) angeordnet ist, um die erwärmte Luft in das untere Ende der Untersuchungsstation (2) aufzubringen, und bei der der Kollektor (4, 27, 37) angeordnet ist, um die Luft vom oberen Ende der Untersuchungsstation (2) zu sammeln.

11. Vorrichtung (20) nach Anspruch 9, bei der die erste Gruppe von Luftdüsen (25) angeordnet ist, um die erwärmte Luft in das obere Ende der Untersuchungsstation (2) aufzubringen, und bei der der Kollektor (27) angeordnet ist, um die Luft vom unteren Ende der Untersuchungsstation (2) zu sammeln.

## Revendications

1. Procédé pour examiner des objets (31) pour détecter des quantités en traces d'une substance cible portée par l'objet (31), comprenant :
appliquer à l'objet (31) un flux d'air qui a été préchauffé, pour déloger des substances portées par ledit objet (31) ; récupérer l'air chauffé après qu'il ait été appliqué à l'objet (31) et analyser ledit air chauffé pour la présence de ladite substance cible, **caractérisé en ce qu'**une température ambiante est déterminée et **en ce que** ledit air est préchauffé à une température au moins 10° au dessus de la température ambiante, à une température dans la gamme de 20 à 42°C, et **en ce qu'**une substance de marquage est introduite dans l'air chauffé avant qu'il ne soit appliqué à l'objet (31), et l'air chauffé récupéré est analysé également pour la présence de ladite substance de marquage.

2. Procédé selon la revendication 1, **caractérisé en ce que** ledit objet (31) est disposé dans un poste d'examen (2, 20, 30) et ledit air préchauffé est appliqué à la fois verticalement et horizontalement dans ledit poste d'examen (2, 20, 30).

3. Procédé selon la revendication 2, **caractérisé en ce que** ledit poste d'examen (2,20) est de configuration cylindrique, et ledit air chauffé est appliqué horizontalement à l'intérieur dudit poste d'examen (2,20).

4. Procédé selon l'une des revendications 2 ou 3, **caractérisé en ce que** ledit air chauffé appliqué verticalement est appliqué à l'extrémité inférieure du poste d'examen (2, 20, 30) et est récupéré à l'extrémité supérieure du poste d'examen (2, 20, 30).

5. Procédé selon l'une des revendications 2 ou 3, **caractérisé en ce que** ledit air chauffé appliqué verticalement est appliqué à l'extrémité supérieure du poste d'examen (2, 20, 30) et est récupéré à l'extrémité inférieure du poste d'examen (2, 20, 30).

6. Procédé selon l'une des revendications précédentes, **caractérisé en ce que** l'objet (31) est une personne ou un bagage.

7. Appareil (20, 30) pour l'examen d'objets (31) pour la détection de quantité en traces, d'une substance cible portée par lesdits objets (31), comprenant :
- une source d'air pressurisée (3) pour appliquer un flux d'air à l'objet (31) afin d'en déloger les substances de celui-ci ;
- un appareil de chauffage (6) pour chauffer l'air avant qu'il ne soit appliqué à l'objet (31) ;
- un récupérateur (4,27, 37) pour récupérer l'air après qu'il ait été appliqué à l'objet (31) ; et
- un analyseur (5, 28, 38) pour l'analyse de l'air récupéré en vue de détecter la présence de ladite substance cible ;
**caractérisé en ce que** le système de chauffage (6) est configuré pour chauffer l'air à une température d'au moins 10°C au dessus de la température ambiante, mais dans la gamme de 20 à 42°C, et **en ce que** ledit appareil (20,30) comporte en outre un injecteur (70) pour introduire une substance de marquage dans l'air chauffé avant qu'il ne soit appliqué à l'objet (31) et **en ce que** ledit analyseur (5) analyse ledit air récupéré également pour la présence de ladite substance de marquage.

8. Appareil (20,30) selon la revendication 7, **caractérisé en ce que** ledit appareil (20,30) comporte en outre un poste d'examen (2) pour recevoir les objets (31) destinés à être examinés ; un premier groupe de buses d'air (25, 35) disposées pour l'application dudit air verticalement au travers du poste d'examen (2) ; et un second groupe de buses d'air (26,36) disposées pour l'application dudit air horizontalement dans le poste d'examen (2).

9. Appareil (20) selon la revendication 8, **caractérisé en ce que** ledit poste d'examen (2) est de configuration cylindrique, et **en ce que** le second groupe de buses (26) est orienté pour appliquer ledit air chauffé de manière circonférentielle dans le poste d'examen (2).

10. Appareil (20, 30) selon la revendication 8 ou 9, **caractérisé en ce que** ledit premier groupe de buses d'air (25,35) est disposé pour appliquer l'air chauffé dans l'extrémité inférieure du poste d'examen (2), et ledit récupérateur (4, 27, 37) est disposé pour récupérer l'air de l'extrémité supérieure du poste d'examen (2).

11. Appareil (20) selon la revendication 9, **caractérisé en ce que** ledit premier groupe de buses est disposé pour appliquer l'air chauffé dans l'extrémité supérieure du poste d'examen (2), et ledit récupérateur (27) est disposé pour récupérer l'air à partir de l'extrémité inférieure du poste d'examen (2).
